# EUROPEAN PATENT SPECIFICATION

(11) **EP 4 300 844 B1**
(45) Date of publication and mention of the grant of the patent: **12.11.2025**
(21) Application number: 22386041.2
(22) Date of filing: 29.06.2022
(51) Int. Cl.: H04B 7/185

(54) **METHOD FOR ENABLING COMMUNICATION BETWEEN A USER EQUIPMENT AND A MOBILE COMMUNICATION NETWORK BEING OR HAVING A NON-TERRESTRIAL NETWORK, BASE STATION ENTITY, SYSTEM AND COMPUTER-READABLE MEDIUM**
VERFAHREN ZUM ERMÖGLICHEN DER KOMMUNIKATION ZWISCHEN EINEM BENUTZERGERÄT UND EINEM MOBILEN KOMMUNIKATIONSNETZ, DAS EIN NICHT-TERRESTRISCHES NETZ IST ODER AUFWEIST, BASISSTATION, SYSTEM UND COMPUTERLESBARES MEDIUM
PROCÉDÉ POUR PERMETTRE UNE COMMUNICATION ENTRE UN ÉQUIPEMENT UTILISATEUR ET UN RÉSEAU DE COMMUNICATION MOBILE ÉTANT OU AYANT UN RÉSEAU NON TERRESTRE, STATION DE BASE, SYSTÈME ET SUPPORT LISIBLE PAR ORDINATEUR

(43) Date of publication of application: 03.01.2024
(73) Proprietor: Deutsche Telekom AG, 53113 Bonn (DE); HELLENIC TELECOMMUNICATIONS ORGANIZATION S.A., 15124 Athen, Marousi (GR)
(72) Inventor: KLATT, Axel, 50999 Köln (DE); NIKOLITSA, Eftychia, 151 22 Maroussi (GR)
(74) Representative: Schwöbel, Thilo K.

(56) References cited:
- EP-A1- 3 905 546
- WO-A1-2021/162609
- CN-B- 109 121 147
- DE-A1- 10 021 112
- US-A1- 2017 019 814
- US-A1- 2019 199 431
- US-A1- 2020 145 078
- US-A1- 2021 234 606
- US-A1- 2022 006 600
- US-A1- 2022 052 753
- US-B1- 11 250 696
- HUAWEI ET AL: "Discussion on cell reselection in NTN", vol. RAN WG2, no. Online; 20210125 - 20210205, 15 January 2021 (2021-01-15), XP051974042, Retrieved from the Internet <URL:https://ftp.3gpp.org/tsg_ran/WG2_RL2/TSGR2_113-e/Docs/R2-2101000.zip R2-2101000 Discussion on cell reselection in NTN.doc> [retrieved on 20210115]
- INTERDIGITAL ET AL: "IoT-NTN cell change", vol. RAN WG2, no. Online; 20211101 - 20211112, 21 October 2021 (2021-10-21), XP052066996, Retrieved from the Internet <URL:https://ftp.3gpp.org/tsg_ran/WG2_RL2/TSGR2_116-e/Docs/R2-2110551.zip R2-2110551 IoT-NTN cell change.docx> [retrieved on 20211021]
- OPPO: "Discussion on the support of discontinuous coverage for IoT over NTN", vol. RAN WG2, no. electronic; 20210809 - 20210827, 6 August 2021 (2021-08-06), XP052033875, Retrieved from the Internet <URL:https://ftp.3gpp.org/tsg_ran/WG2_RL2/TSGR2_115-e/Docs/R2-2107081.zip R2-2107081 - Discussion on the support of discontinuous coverage for IoT over NTN.doc> [retrieved on 20210806]

## Description

### BACKGROUND

The present invention relates a method for enabling communication between a user equipment and a mobile communication network being or having a non-terrestrial network, wherein the user equipment is served by a base station entity being part of that non-terrestrial network, wherein the base station entity has or is provided with - in view of serving or providing radio coverage to the user equipment - at least an antenna entity or functionality being either a satellite-based antenna entity or functionality, or an antenna entity or functionality based on a high-altitude platform.

Additionally, the present invention relates to a base station entity for enabling communication between a user equipment and a mobile communication network being or having a non-terrestrial network, wherein the user equipment is served by a base station entity being part of that non-terrestrial network, wherein the base station entity has or is provided with - in view of serving or providing radio coverage to the user equipment - at least an antenna entity or functionality being either a satellite-based antenna entity or functionality, or an antenna entity or functionality based on a high-altitude platform.

Furthermore, the present invention relates to a system for communication between a user equipment and the mobile communication network, the mobile communication network being or having a non-terrestrial network, wherein the user equipment is served by a base station entity being part of that non-terrestrial network, wherein the base station entity has or is provided with - in view of serving or providing radio coverage to the user equipment - at least an antenna entity or functionality being either a satellite-based antenna entity or functionality, or an antenna entity or functionality based on a high-altitude platform.

Furthermore, the present invention relates to a computer-readable medium for enabling communication between a user equipment and a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part thereof, or a region within a country) in a repeating pattern of typically stationary (radio) cells (and associated base station entities) which typically belong to (or are used by or associated or assigned to) a mobile network operator (MNO).
Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space based network infrastructure include, e.g., mobile satellite connectivity with low earth orbit (LEO) satellites, medium earth orbit (MEO) satellites and/or geostationary earth orbit (GEO) satellites and also so-called high altitude platforms or high altitude pseudo-satellites (HAPS).
Examples thereof are known from the following documents: US 2022/052753 A1;
EP 3905546 A1; WO 2021/162609 A1; US 11250696 B1; US 2022/006600 A1;
US 2019/199431 A1; HUAWEI ET AL: "Discussion on cell reselecjon in NTN", 3GPP DRAFT: R2-2101000; INTERDIGITAL ET AL: "loT-NTN cell change", 3GPP DRAFT; R2-2110551; and OPPO: "Discussion on the support of discontinuous coverage for loT over NTN", 3GPP DRAFT R2-2107081, US 2021/234606 A1, US 2017/019814 A1, DE10021112 A1, CN109121147 B.
Such non-terrestrial networks are able to provide global cellular connectivity to, e.g. handheld, devices or user equipments, typically using satellite or HAP coverage with quasi earth fixed beams, i.e. radio coverage is attempted to be provided, for a certain considered (quasi) fixed geographical area (of the considered radio cell), in an almost statical or unchanged manner during a certain time interval or until a certain point in time.
This is in contrast to using earth-moving beams by means of which radio coverage is provided in a moving geographical area, or earth-moving radio cell, that is moving, relative to the earth surface, together with the movement of the satellite (or the high altitude platform device); such earth-moving radio cells typically being located around a geographical location, often corresponding to a projection of the current position of the satellite (or of the high altitude platform device), along a more or less vertical line, on to the earth surface.
However in practice, it is challenging to provide radio coverage for an extended geographical area and in an efficient manner, while simultaneously taking into consideration challenges such as an unevenly distributed population density and an associated demand for communication services being concentrated in some parts of the geographical area.

### SUMMARY

An object of the present invention is to provide a technically simple, effective and cost-effective solution for enabling communication between a user equipment (and, typically, a multitude of user equipments located in a certain geographical area, and there having a certain distribution) and mobile communication network, wherein the mobile communication network is a non-terrestrial network (or at least comprises a non-terrestrial network; or wherein at least a part of the mobile communication network corresponds to or is a non-terrestrial network) and wherein the base station entity has or is provided with - in view of serving or providing radio coverage to the user equipment, or the plurality thereof - at least an antenna entity or functionality being either a satellite-based antenna entity or functionality, or an antenna entity or functionality based on a high-altitude platform. A further object of the present invention is to provide a corresponding system and a computer-readable medium.

The object of the present invention is achieved by a method according to claim 1.

It is thereby advantageously possible according to the present invention that it is possible to provide radio coverage in a more efficient manner: To provide radio coverage for an extended geographical area, typically a plurality of satellites or high altitude platform systems or devices (or non-terrestrial network components or elements) are required; hence, reducing the required number of such non-terrestrial network components is typically more (cost-)efficient. Furthermore, population, and consequently communication demand, is typically not evenly distributed on the considered geographical area; hence in order to reduce the relative performance requirements, and, hence, complexity, of non-terrestrial network components (e.g. satellites or high altitude platform devices), by means of being able to shape the coverage area of associated radio cells, it is advantageously possible to focus communication performances of more than one non-terrestrial network component or device, e.g. on a densely populated area.

The present invention is focused on low earth orbit (LEO) satellites or high altitude platform entities which typically are located up to 300 km until 1500 km above ground (especially 800 km to 1000 km), and are, typically, traveling at a velocity of around 7 km/s, resulting in a round trip time about the globe of typically about 100 minutes.

According to the present invention, the user equipment is connected to (or is in) the mobile communication network that is a non-terrestrial network; alternatively, the mobile communication network at least comprises a part that corresponds to or is a non-terrestrial network. The user equipment is (or, rather, the plurality of user equipments are) served by the base station entity as in a conventionally known mobile communication network; however, the serving base station entity is assumed as being part of the non-terrestrial network (or, at least, the non-terrestrial network part) of the mobile communication network. According to the present invention, the base station entity is provided with at least one antenna entity or functionality (but preferably, the base station entity is provided with more than one antenna entities or functionalities), the at least one antenna entity or functionality (of the base station entity) is either a satellite-based antenna entity or functionality (i.e. located onboard a satellite), or an antenna entity or functionality based on a high-altitude platform device (i.e. located onboard such a high altitude platform device). The base station entity is able to serve (i.e. providing communication services to) the user equipment (or plurality thereof) by means of or using the at least one antenna entity or functionality - typically using a service (radio) link towards and/or from the user equipment in order to realize downlink and/or uplink data transmissions.
According to the present invention, the whole (or mayor parts of the) functionality of the base station entity might be located onboard the satellite or onboard the high-altitude platform device (hence, in this case, typically requiring some kind of backhaul connectivity to an earth or ground station and/or to another satellite or high altitude platform device). Alternatively, the mayor parts of the functionality of the base station entity might be located either at or in an earth or ground station, or at or in another satellite or high altitude platform device (in this case, typically requiring some kind of feeder link or feeder connectivity to an earth or ground station and/or to another satellite or high altitude platform device).
The antenna entity or functionality (either as part of the satellite or as part of the high altitude platform device) typically moves relative to the earth surface along a direction of movement (and/or following a certain, typically predefined, trajectory), and is thereby able to provide radio coverage to a radio cell, i.e. a geographical area where user equipments are able to be served by that satellite or high altitude platform device. In case of a satellite-based antenna entity or functionality, the trajectory of the movement of the satellite (at least from a fixed or quasi stationary ground perspective) can typically very well be approximated by an almost straight line as the curvatures of such satellite trajectories is almost negligible from such a perspective. However, in case of a high-altitude platform device, the trajectory of such a device might be less straight, i.e. having a non-negligible curvature.

According to the present invention the antenna entity or functionality is operated or is configured such that the shape of the coverage area of the radio cell is configured or configurable in a predefined manner (or in a configurable manner) other than circular or elliptical, as a circularly or elliptically shaped coverage area of the radio cell typically corresponds to the normal or to-be-expected shape of a coverage area using standard antenna equipment, especially with none-steerable antennas. Typically, the coverage area on the ground of a conventionally known low earth orbit satellite is typically a circle or an ellipse moving over the ground. Likewise, the coverage area of conventionally known high altitude platform devices or systems typically also corresponds to a circle or an ellipse, either moving over the ground or being (rather) stationary, e.g. in case of drones flying between 5 and 25 km above ground.
Especially according to the present invention, a specifically defined shape or form of the radio cell or of its coverage area is realized by means of conforming, as much as possible, the shape of a coverage area obtained by a specifically considered configuration or mode of operation of the antenna entity or functionality to the desired geometrical form or shape; one possibility to measure whether the shape of the coverage area conforms to (or matches) the desired shape could, e.g., be to attempt to reduce, especially as much as technically meaningfully possible, either one or both of
-- the (absolute or relative) surface area of the radio cell not covering the desired geometrical form or shape,
-- the (absolute or relative) surface area of the radio cell extending the desired geometrical form or shape; another possibility of such a measure could be to mandate a a maximum (absolute or relative) distance between the radio cell and the desired geometrical form or shape, e.g. along a direction orthogonal to an edge of the desired geometrical form or shape, or along a direction from the center (or weighted center; 'center of gravity') of the coverage area or of the desired geometrical form or shape. In this respect, the effective extension of the radio cell considered could, e.g., be defined by considering those locations where a signal strength (of radio signals received, by the user equipment, from the antenna entity or functionality) exceeds a certain predefined (absolute or relative) threshold value.

For the sake of simplicity, in the context of the present invention, it is assumed that one radio cell or coverage area is provided by one satellite or high altitude platform device.

According to the present invention, the base station entity is provided with at least one antenna entity or functionality (but preferably, the base station entity is provided with more than one antenna entities or functionalities), the at least one antenna entity or functionality (of the base station entity) is either a satellite-based antenna entity or functionality (i.e. located onboard a satellite), or an antenna entity or functionality based on a high-altitude platform device (i.e. located onboard such a high altitude platform device). The base station entity is able to serve (i.e. providing communication services to) the considered user equipment by means of or using the at least one antenna entity or functionality - typically using a service (radio) link towards and/or from the user equipment in order to realize downlink and/or uplink data transmissions.
According to the present invention, the whole (or mayor parts of the) functionality of the base station entity might be located onboard the satellite or onboard the high altitude platform device (hence, in this case, typically requiring some kind of backhaul connectivity to an earth or ground station and/or to another satellite or high altitude platform device). Alternatively, the mayor parts of the functionality of the base station entity might be located either at or in an earth or ground station, or at or in another satellite or high-altitude platform device (in this case, typically requiring some kind of feeder link or feeder connectivity to an earth or ground station and/or to another satellite or high altitude platform device).

According to the present invention, the antenna entity or functionality is operated or configured such that, in a first mode of operation, the shape of the coverage area of the radio cell is configured or configurable in a first predefined manner other than circular or elliptical, and, in a second mode of operation, the shape of the coverage area of the radio cell is configured or configurable in a second predefined manner,
wherein the first mode of operation is applied at a first point in time or during a first time interval, and the second mode of operation is applied at a second point in time or during a second time interval.

It is thereby advantageously possible that the coverage area is able to be modified and/or adapted to different requirements (e.g. related to the demand of communication services), especially different requirements at different points in time (especially in case, but not necessarily, that the radio cell corresponds to an earth-moving radio cell).

According to the present invention, the shape of the coverage area of the radio cell corresponds, at least in or during one mode of operation, to a general polygon, being defined by a number of points or geographical locations such that a certain area, especially a populated area such as a city, is covered.

It is thereby advantageously possible according to the present invention that the coverage area of the radio cell is able to be configured very flexibly. Furthermore the coverage area of the radio cell corresponds to a general polygon (typically still a simple polygon but not necessarily a convex polygon), being defined by a number of points or geographical locations such that a certain area, especially a populated area such as a city, is covered.

According to the present invention, it is furthermore advantageously possible and preferred that the antenna entity or functionality moving relative to the earth surface along a direction of movement provides radio coverage to a moving area corresponding to an earth-moving radio cell.

According to such a preferred embodiment of the present invention, the radio cell or coverage area is an earth-moving radio cell or coverage area, typically moving or travelling on the earth surface in unison with the movement of the satellite or high-altitude platform device. This means that a considered satellite or high-altitude platform device is able to provide coverage and/or service (or communication services) only during a defined period of time or time interval to a user equipment that is assumed being stationary or almost stationary (relative to the ground speed of the satellite or high-altitude platform) on or above the earth surface.
In case of such an earth-moving radio cell, this defined period of time or time interval (of coverage or service), of course, depends on the size and/or the geometry of the earth-moving radio cell or coverage area (and also on its orientation), and on the velocity and/or direction of movement and/or trajectory of the satellite or high-altitude platform device above ground.
The antenna entity or functionality (either as part of the satellite or as part of the high-altitude platform device) thus moves relative to the earth surface along a direction of movement (and/or following a certain, typically predefined, trajectory), and is thereby able to provide radio coverage to the earth-moving radio cell. In case of a satellite-based antenna entity or functionality, the trajectory of the movement of the satellite (at least from a fixed or quasi stationary ground perspective) can typically very well be approximated by an almost straight line as the curvatures of such satellite trajectories is almost negligible from such a perspective. However, in case of a high-altitude platform device, the trajectory of such a device might be less straight, i.e. having a non-negligible curvature.

According to the present invention, it is furthermore advantageously possible and preferred that the antenna entity or functionality moving relative to the earth surface along a direction of movement provides radio coverage to a static area corresponding to an earth-fixed radio cell.

According to such a preferred embodiment of the present invention, the radio cell or coverage area is an earth-fixed radio cell or coverage area, typically staying above a geographical area (and therefore being able to provide radio coverage) for a certain time interval of several tens of seconds or several minutes before moving or travelling (especially in case of a satellite) beyond or past that geographical area. Especially in case of flying high altitude platform devices, such systems might be able to stay essentially earth-fixed, and, hence, would have the possibility to provide radio coverage either without an explicitly defined service time interval, or, at least, for a much longer service time interval.

According to the present invention, the shape of the coverage area of the radio cell is configured or configurable in a predefined manner, especially such that a rather rectangular radio cell is generated, wherein especially two of the sides of the radio cell or coverage area are essentially parallel to the direction of movement of the antenna entity or functionality or essentially parallel to the central trajectory path of the radio cell,
wherein the antenna entity or functionality generates at least one moving beam, or spot beam, wherein the moving beam is oriented in different spatial directions at different points in time such that the coverage area is swept through during a predetermined time interval and such that the resulting coverage area approximately is or corresponds to the predefined shape of the coverage area of the radio cell, especially a rectangle or a rectangle having rounded corners.

It is thereby advantageously possible according to the present invention that the coverage area of the radio cell is able to be configured in a very flexibly manner as to its shape or form.

According to the present invention, it is furthermore advantageously possible and preferred that a reference location information as well as a service time information is transmitted, by the base station entity or by the antenna entity or functionality, to the user equipment,
wherein the service time information relates to until when the base station entity, or the antenna entity or functionality likely stops serving the currently covered area,
wherein the reference location information corresponds, at least approximately, to the shape of the coverage area of the radio cell produced or generated by the antenna entity or functionality,
wherein especially the base station entity transmits, and the user equipment receives, the reference location information and the service time information as information elements as part of a system information block, especially broadcast by the base station entity, especially system information block 19 with 3GPP NR technology,
wherein especially the reference location information comprises, in case of a rectangularly shaped coverage area of the radio cell, at least one reference point information, at least one height information and/or at least one width information, preferably a first height information, a second height information, a first width information and a second width information, wherein the height information preferably corresponds to the extension of the coverage area, from the reference point, in a direction essentially parallel to the direction of movement of the antenna entity or functionality, and wherein the width information preferably corresponds to the extension of the coverage area, from the reference point, in a direction essentially orthogonal to the direction of movement of the antenna entity or functionality,
wherein especially the reference location information comprises, in case of a coverage area of the radio cell shaped as a simple polygon or a regular polygon or a general polygon, a plurality of pieces of reference point information, especially corresponding to the corner points of the polygonal coverage area.

It is thereby advantageously possible according to the present invention that the reference location information as well as the service time information is able to be transmitted, by the base station entity or by the antenna entity or functionality, to the user equipment in an efficient manner. Especially according to the present invention, the reference location information is indicated in remaining UTC seconds in 10 ms units since 00:00:00 on Gregorian calendar date 1 January, 1900 (midnight between Sunday, December 31, 1899 and Monday, January 1, 1900).
Furthermore according to the preferred embodiment where a reference location information as well as a service time information is transmitted to the user equipment: As already mentioned, the antenna entity or functionality (either as part of the satellite or as part of the high altitude platform device) typically moves relative to the earth surface along a direction of movement; in case of a satellite-based antenna entity or functionality, the trajectory of the movement of the satellite can typically very well be approximated by an almost straight line; however, in case of a high-altitude platform device, the trajectory of such a device might be less straight, i.e. having a non-negligible curvature.
Especially, the service time information corresponds to a general service time information, i.e. applicable to all or almost all user equipments located within the coverage area of the radio cell. The reference location information relates to a specific part of the coverage area (or, in case of an earth-moving radio cell, to a specific part of the currently covered area), typically the center of the coverage area. The (general) service time information relates to until when (i.e. at which (future) point in time) the base station entity (via its satellite-based antenna entity or functionality) likely stops being able to serve the coverage area.
It is assumed according to the present invention that the reference location information and the service time information is transmitted repeatedly, especially in regular time intervals of, e.g., 320 ms or 640 ms or 1280 ms or of another duration, and that the transmitted values of the reference location information and the service time information are (if applicable) updated in order to correspond to the correct (or, if applicable, current) values either at the transmission point in time, or at a point in time corresponding to a predetermined (comparatively small) offset time relative to the transmission point in time; hence, the successive indications (by the base station entity, and towards the user equipment) of the (repeatedly updated) reference location information provide (or correspond to) a sequence of points or locations (typically on the earth surface) that, collectively, at least roughly define a travel path in case of an earth-moving radio cell (or, at least, from which such a travel path could be derived), especially a central trajectory path of the radio cell.

Furthermore, the present invention relates to a base station entity according to claim 7.

Furthermore, the present invention relates to a system according to claim 8.

Still additionally, the present invention relates to a computer-readable medium according to claim 9.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates the situation of a user equipment in a mobile communication network being a non-terrestrial network or at least comprising a part corresponding to a non-terrestrial network, the user equipment being served by a base station entity having at least an antenna entity or functionality being a satellite-based antenna entity or functionality.
Figure 2 schematically illustrates the situation of the user equipment being served by a base station entity having a satellite-based antenna entity or functionality moving relative to the earth surface along a direction of movement, thereby providing radio coverage to a moving area corresponding to an earth-moving radio cell.
Figures 3 and 4 schematically illustrate the user equipment being served by a base station entity with an antenna entity or functionality providing a rectangular radio coverage area.
Figures 5 and 6 schematically illustrate different exemplary embodiment to realize a rectangular radio coverage area.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

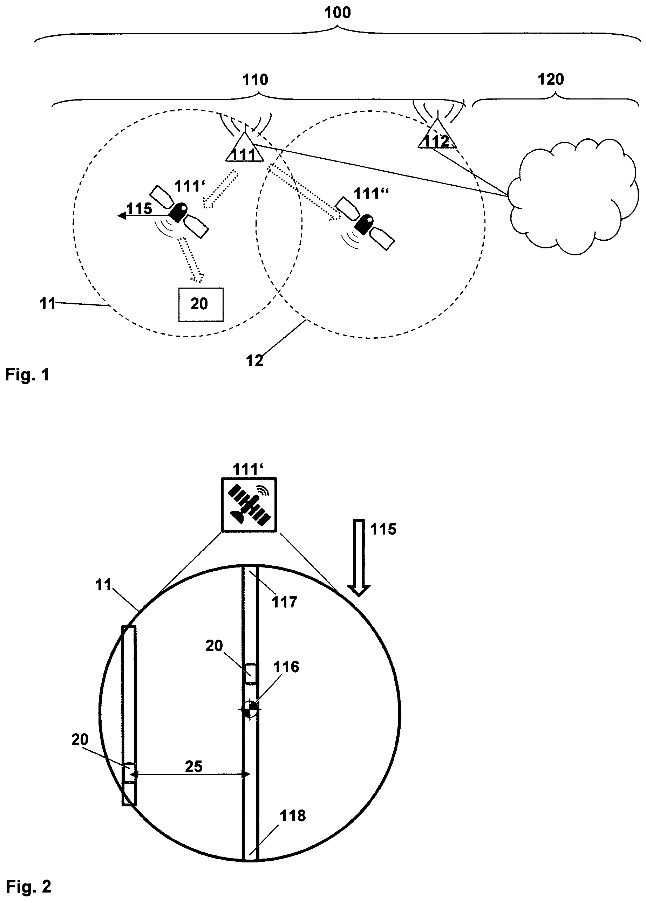

In Figure 1, a user equipment 20 is schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112.

The mobile communication network 100 (or telecommunications network 100) is or at least comprises a part corresponding to or being a non-terrestrial network. The user equipment 20 is served by the (first) base station entity 111 being part of that non-terrestrial network or that non-terrestrial network part.
The base station entity 111 has or is provided with - in view of serving or providing radio coverage to the user equipment 20 - at least one antenna entity or functionality 111' being either a satellite-based antenna entity or functionality, or an antenna entity or functionality based on a high-altitude platform; Figure 1 primarily shows the alternative of a satellite-based antenna entity or functionality 111'. The antenna entity or functionality 111' - being part of the non-terrestrial network (part) of the mobile communication network 100 - is moving relative to the earth surface along a direction of movement which is schematically indicated by reference sign 115 in Figure 1. The base station entity 111, via or by means of the antenna entity or functionality 111', is thereby able to provide radio coverage to an area (on the earth's surface), corresponding to a radio cell 11. The second or further base station entity 112 is also schematically shown in Figure 1 as well as a further antenna entity or functionality 111" providing or serving a further radio cell 12. According to alternative embodiments of the present invention, the antenna entity or functionality 111' (moving relative to the earth surface along a direction of movement 115) provides radio coverage to a moving area, i.e. radio cell 11 corresponds to an earth-moving radio cell 11; alternatively, the antenna entity or functionality 111' (still moving, typically, relative to the earth surface along the direction of movement 115) provides radio coverage to a static area, i.e. radio cell 11 corresponds to an earth-fixed radio cell 11.

According to the present invention, the base station entity 111 is provided with at least one antenna entity or functionality 111' (but preferably, the base station entity 111 is provided with more than one antenna entities or functionalities 111', 111"), the at least one antenna entity or functionality 111' (of the base station entity 111) is either a satellite-based antenna entity or functionality (i.e. located onboard a satellite as shown in Figure 1), or an antenna entity or functionality based on a high-altitude platform device (i.e. located onboard such a high altitude platform device, not explicitly shown in Figure 1). The base station entity 111 is able to serve (i.e. providing communication services to) the considered user equipment 20 by means of or using the at least one antenna entity or functionality 111' (or, by means of using the first antenna entity or functionality 111' during one time interval, and by means of using the second antenna entity or functionality 111" during a subsequent further time interval), especially in case of an earth-moving radio cell 11; in case of an earth-fixed radio cell 11, such a handover operation (of the base station entity 111 serving the considered user equipment 20 by means of using the first antenna entity or functionality 111' during a first time interval, and by means of using the second antenna entity or functionality 111" during a subsequent second time interval) is typically also required in case that the antenna entities or functionalities 111', 111" are satellite-based but not necessarily in case that the antenna entities or functionalities 111', 111" are based on a high-altitude platform device. In any case, typically, a service (radio) link towards and/or from the considered user equipment 20 is used in order to realize downlink and/or uplink data transmissions; this is schematically indicated, in Figure 1, by means of a dotted arrow, directed from the antenna entity or functionality 111' towards the considered specific user equipment 20.

Figure 1 schematically and exemplarily shows a configuration where the mayor parts of the functionality of the base station entity 111 is located separated from the antenna entity or functionality 111', especially at or in an earth or ground station 111; alternatively, the mayor parts of the functionality of the base station entity 111 could also be located at or in another satellite or high-altitude platform device. In such a scenario where the mayor parts of the functionality of the base station entity 111 are located separated from the antenna entity or functionality 111' (and from the further antenna entity or functionality 111"), the antenna entity or functionality 111' (and the further antenna entity or functionality 111"), typically requires some kind of feeder link or feeder connectivity (i.e. to the earth or ground station and/or to another satellite or high altitude platform device) ; this is schematically indicated, in Figure 1, by means of dotted arrows, directed from the base station entity 111 towards the antenna entities or functionalities 111', 111", respectively.
Alternatively to the configuration shown in Figure 1, it is also possible and preferred according to the present invention that the whole (or mayor parts of the) functionality of the base station entity 111 might be located onboard the satellite or onboard the high altitude platform device. In this case, a backhaul connectivity is typically provided, from the combined satellite-based base station entity 111 comprising the antenna entity or functionality 111', to an earth or ground station and/or to another satellite or high-altitude platform device.

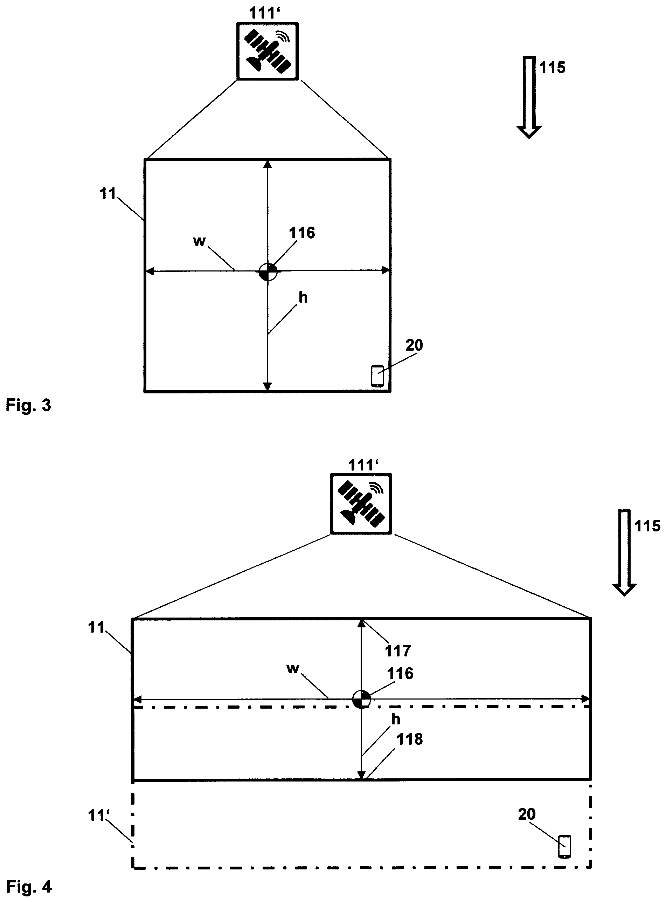

In Figure 2, the situation of the user equipment 20 being served by the base station entity 111 having the satellite-based antenna entity or functionality 111' moving relative to the earth surface along a direction of movement 115 is schematically shown for two different locations of the specific user equipment 20. At a considered point in time, the base station entity 111, via the antenna entity or functionality 111', provides radio coverage to the radio cell 11 as schematically shown in Figure 2, wherein this moving radio cell typically moves together with the antenna entity or functionality 111', i.e. corresponds to an earth-moving radio cell 11. In the direction of movement 115 of the antenna entity or functionality 111', the earth-moving radio cell 11 comprises a central part 116 typically comprising the location of the reference location information 116, e.g., in the center of the radio cell 11. The exemplarily shown specific user equipment 20 in its first location, being located at or on the central part of the radio cell 11, would be able to be served by the base station entity 111 and via the antenna entity or functionality 111' during the whole time interval required for the antenna entity or functionality 111' to sweep over the radio cell 11 - i.e. from the point in time the radio coverage, by means of the antenna entity or functionality 111', is first provided to a region (on the central part of the radio cell 11) indicated by means of reference sign 117 until the point in time the radio coverage, by means of the antenna entity or functionality 111', is lost from the point of view of a region (on the central part of the radio cell 11) indicated by means of reference sign 118. In contrast thereto (i.e. to the specific user equipment 20 being located in its first considered location at or on the central part of the radio cell 11), in case the specific user equipment 20 is located rather distanced from the central part of the radio cell 11 (to the left hand side in Figure 2) the time interval it experiences or sees radio coverage (provided by that same antenna entity or functionality 111') is much shorter.
Roughly, the durations of the corresponding service time intervals of these two exemplarily considered locations of the user equipment 20 are able to be schematically represented by the lengths of the two rectangles (parallel to the direction of movement 115) shown in Figure 2.
The radio cell 11 schematically and exemplarily shown in Figure 2 corresponds to a circularly (or elliptically) shaped radio cell 11. Due to the distance (indicated by means of reference sign 25 in Figure 2) of the second location of the user equipment 20 with respect to the central part of the radio cell 11 (corresponding to the first location of the user equipment 20), and due to the roughly circular (or elliptical) shape of the radio cell 11, the service time interval is much shorter in case the specific user equipment 20 is located at the second location.
According to the present invention, wherein the antenna entity or functionality 111' is operated or configured such that the shape of the coverage area of the radio cell 11 is configured or configurable in a predefined manner other than circular or elliptical - an example of which is schematically shown in Figures 3 and 4.

In Figures 3 and 4 the user equipment 20 is served by the base station entity, and the base station entity has or is associated with the antenna entity or functionality 111'. Again, the radio cell 11 has or comprises (both in the exemplary embodiment of Figure 3 as well as in the embodiment of Figure 4), in the direction of movement 115 of the antenna entity or functionality 111', a central part 116 typically comprising the location of the reference location information 116, e.g., in a central part or in the center of the radio cell 11. In the exemplarily shown embodiment of Figures 3 and 4, the antenna entity or functionality 111' provides a rectangular radio coverage area 11 or radio cell 11, especially having - at least roughly - an extension of (e.g. a certain number of kilometers) h parallel or substantially parallel to its direction of movement 115, and an extension of (e.g. a certain number of kilometers) w orthogonal or substantially orthogonal to its direction of movement 115. The representation of Figure 3 is able to be understood as rather showing an earth-fixed radio cell 11. Considering the movement 115 of the antenna entity or functionality 111', the base station entity 111 (or antenna entity or functionality 111') is able to serve (or to provide communication services to user equipments 20 located in) the coverage area 11 for a certain period of time, but the radio cell 11 or coverage area 11 is essentially rather fixed, i.e. does either not move at all, or, at least, does not move considerably, especially not (except for marginal effects) at its boundaries parallel to the direction of movement 115; regarding its boundaries orthogonal to the direction of movement 115, there might be a drift of the extension (h) of the coverage area of the radio cell 11, depending on from which direction (especially from which altitude or elevation from the perspective of the coverage area of the radio cell 11) the antenna entity or functionality 111' provides its radio coverage. The representation of Figure 4 is able to be understood as rather showing an earth-moving radio cell 11. Considering the movement 115 of the antenna entity or functionality 111', the base station entity 111 (or antenna entity or functionality 111') serves (or provides communication services to user equipments 20 located in) the coverage area 11 at a first point in time, and the radio coverage moves to coverage area 11' at a later (or second) point in time.
The exemplarily shown user equipment 20 is able to be served, by the base station entity 111 and via the antenna entity or functionality 111', during a certain period of time, in case of the earth-moving radio cell 11, 11' shown in Figure 4, the time interval required for the antenna entity or functionality 111' to sweep over (the height extension of the radio coverage area of) the radio cell 11 - i.e. from the point in time the radio coverage, by means of the antenna entity or functionality 111', is first provided to a region indicated by means of reference sign 117 until the point in time the radio coverage, by means of the antenna entity or functionality 111', is lost from the point of view of a region indicated by means of reference sign 118. By means of providing a rather rectangular extension of the radio coverage area 11, the service time interval is rather independent from the user equipment's lateral distance from the central part of the radio cell 11

In any case and irrespective of the radio cell 11 being or corresponding to a rather earth-moving radio cell (cf. Figure 4) or to a rather earth-fixed radio cell (cf. Figure 3), it is preferred according to the present invention that the base station entity 111 (via the antenna entity or functionality 111') transmits, and the user equipment 20 receives, the reference location information 116 and the service time information (being in both generally applicable to user equipments 20 located within the respective coverage area 11, i.e. irrespective of their lateral distance from the central part of the coverage area. Especically, the reference location information 116 relates to a specific part of the radio cell 11, and the service time information, or also called general service time information, relates to until when the base station entity 111 likely stops serving the radio cell 11 (especially due to the movement of the satellite-based antenna entity or functionality 111' being moving).

By means of the present invention, it is advantageously possible to provide shape-optimized coverage areas, and this for earth-moving radio cells 11 and as well for earth-fixed radio cells 11. With such an optimization, realized especially by means of using advanced antenna technologies at the antenna entity or functionality (especially onboard of satellites, especially low earth orbit satellites, or high-altitude platform devices), it is advantageously possible to overcome drawbacks arising from the "classical approach" (with circular or elliptic coverage). Hence a customized creation of cellular coverage is able to be applied using satellite-based antenna entities or functionalities or high-altitude platform-based antenna entities or functionalities (or also unmanned aerial vehicle-based antenna entities or functionalities), e.g. flying above the ground.

According to the present invention the shape of the coverage area of the radio cell 11 corresponds, at least in or during one mode of operation, to
-- a general polygon, being defined by a number of points or geographical locations such that a certain area, especially a populated area such as a city, is covered.

Shaped-optimized coverage areas (especially a rather rectangular radio cell 11) are able to be realized by means using:
-- beam sweeping (i.e. the antenna entity or functionality 111' generates at least one moving beam, or spot beam, wherein the moving beam is oriented in different spatial directions at different points in time such that the coverage area is swept through during a predetermined time interval and such that the resulting coverage area approximately is or corresponds to the predefined shape of the coverage area of the radio cell 11).

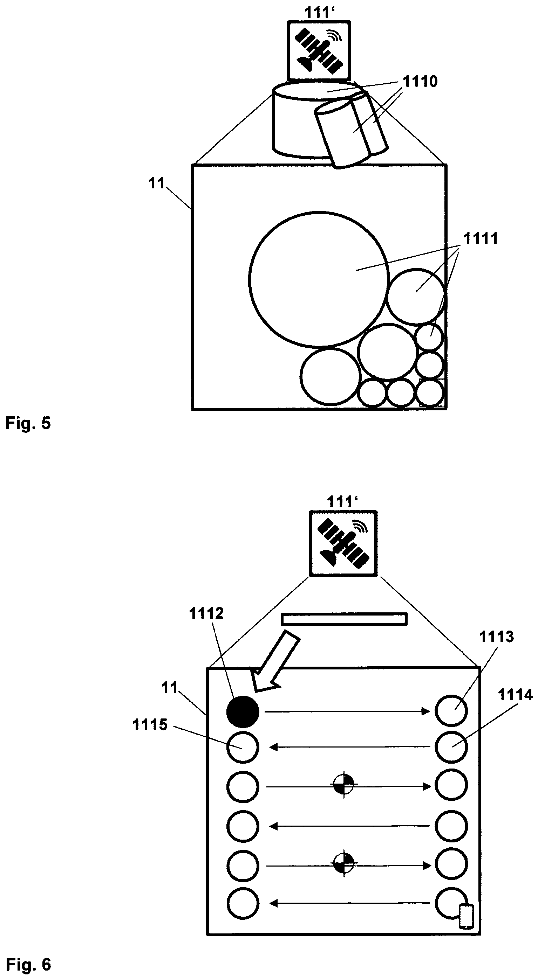

An example which is not part of the invention is the possibility to realize shape-optimized coverage areas is able to be realized, according to the present invention as schematically shown in Figure 5, by means of using, as part of the antenna entity or functionality 111', a plurality of antenna panels 1110 or antenna elements 1110, wherein each one of such antenna panels 1110 covers a specific sub area or portion 1111 of the radio coverage area 11 of the radio cell.

Furthermore, the possibility to realize shape-optimized coverage areas is also able to be realized, according to the present invention as schematically shown in Figure 6, by means of using at least one antenna beam that is swiped through the coverage area 11: E.g. the area of the radio cell 11 is able to be covered by means of comparatively quickly scanning or sweeping through a plurality of different locations such as to, e.g., provide coverage to a first location 1112 at a first point in time, to a second location 1113 at a second point in time, to a third location 1114 at a third point in time, to a fourth location 1115 at a fourth point in time, and so forth in order to cover and thereby providing radio coverage to the radio cell 11. Of course, it is advantageously possible to use more than one antenna beam, or even one antenna beam per coverage line (e.g. between the first and second locations 1112, 1113, or between the third and fourth locations 1114, 1115). Especially this scanning or sweeping of an antenna beam might be realized by means of a continuous movement or by means of discontinuously targeting different discrete positions (at specific respective points in time).

According to the present invention the antenna entity or functionality 111' is operated or configured such that, in a first mode of operation, the shape of the coverage area of the radio cell 11 is configured or configurable in a first predefined manner other than circular or elliptical, and, in a second mode of operation, the shape of the coverage area of the radio cell 11 is configured or configurable in a second predefined manner, wherein the first mode of operation is applied at a first point in time or during a first time interval, and the second mode of operation is applied at a second point in time or during a second time interval.
In this respect, it is especially preferred according to the present invention that a dynamic coverage area is able to be created, supporting the flexible provision of satellite network capacity depending on the current need, i.e. in crowded regions coverage provided by satellites might be configured more in a more focused manner while in rural areas or over the oceans another configuration applies, having a wider coverage area.

Additionally, it is preferred according to the present invention that the reference location information 116 as well as the (general) service time information is transmitted, by the base station entity 111 (or by the antenna entity or functionality 111') to the user equipment 20. The service time information relates to until when the base station entity 111 (or the antenna entity or functionality 111') likely stops serving the currently covered area, and the reference location information corresponds, at least approximately, to the shape of the coverage area of the radio cell 11 produced or generated by the antenna entity or functionality 111'.
Especially the base station entity 111 transmits, and the user equipment 20 receives, the reference location information and the service time information as information elements as part of a system information block, especially broadcast by the base station entity, especially system information block 19 with 3GPP NR technology 111.
In case of a rectangularly shaped coverage area of the radio cell 11, the reference location information especially comprises at least one reference point information, at least one height information (h) and/or at least one width information (w), preferably a first height information, a second height information, a first width information and a second width information, wherein the height information preferably corresponds to the extension of the coverage area, from the reference point, in a direction essentially parallel to the direction of movement 115 of the antenna entity or functionality 111', and wherein the width information preferably corresponds to the extension of the coverage area, from the reference point, in a direction essentially orthogonal to the direction of movement 115 of the antenna entity or functionality 111'.
In case of a coverage area of the radio cell (11) being shaped as a simple polygon or a regular polygon or a general polygon, the reference location information especially comprises a plurality of pieces of reference point information, especially corresponding to the corner points of the polygonal coverage area.
Hence, for the signaling of the satellite-created (or high-altitude platform-created) rectangular or other shaped coverage area, related radio resource control, RRC, signaling the respective radio technology is preferably utilized, in case of 3GPP new radio, NR, especially the system information broadcast, e.g. system information block, SIB 19, by means of which the related information is added using RRC signaling.
E.g. for a rectangular shape of the coverage area 11, the coverage area height and width is transmitted using RRC signalling:
-- regarding the height of the coverage area 11: h1 : RP : h2 (so distance ½ H (h1) in direction of moving satellite coverage + ½ H (h2) in opposite direction);
-- regarding the width of the coverage area 11: w1 : RP : w2 (so distance ½ W (w1) left in direction of moving satellite coverage + ½ W (w2) right of central line);
with such signalling (h1=h2 & w1=w2), the reference point 116 is located in the center (center of gravity) of the coverage area rectangle; alternatively with (h1<>h2 & w1<>w2) the reference point 116 is located flexibly inside the rectangle; with (h1=h2=w1=w2) the reference point 116 corresponds to the center of a quadratic coverage area 11, and with (h1+h2=w1+w2), the reference point is located flexibly inside of a quadratic coverage; optionally, an angle can be provided relative to the moving vector (direction of movement 115) to indicate a tilted quadratic or rectangular coverage shape.
_{[TS1]} For a freely defined and shaped coverage area 11 as a polygon, the definition with multiple reference points (each a GNSS position) is proposed according to the present invention: Area = [RP1; RP2, RP3, i.e. reference points 1, 2, 3] equals a triangle; Area = [RP1; RP2, RP3, RP4, i.e. reference points 1, 2, 3, 4] equals a rectangle or a trapeze or a parallelogram. Hence, with such a polygon-based definition of the coverage area 11, any coverage shape is able to be described according to the present invention.
Hence, the following ASN.1 additions to SIB19 (for a rectangular coverage shape) are proposed:

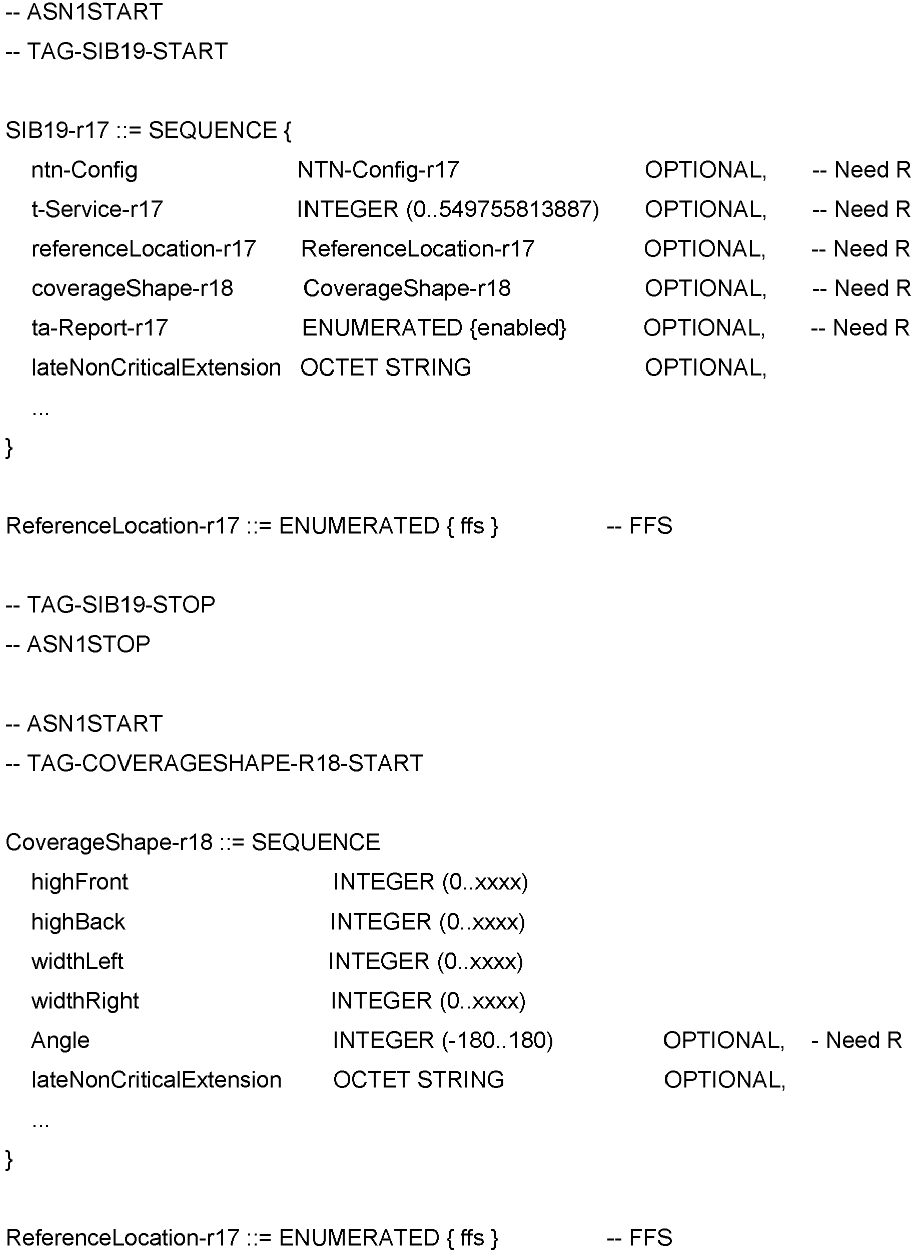

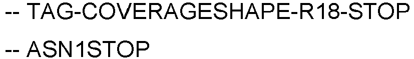

Based on OAM (operation and maintenance) parametrisation and related signalling from the control instance to the satellite (or, to the base station entity 111 and its antenna entity or functionality 111'), the information which shape of coverage the satellite (or antenna entity or functionality 111') shall be created is needed. The OAM interface carries this information, e.g. as defined in TS38.300:
Ephemeris information describing the orbital trajectory information or coordinates for the non-terrestrial network vehicles or devices; this information is especially provided on a regular basis or upon demand to the gNB; especially two different sets of ephemeris format shall be supported:
Set 1: Satellite position and velocity state vectors: position; velocity;
Set 2: At least the following parameters in orbital parameter ephemeris format, as specified in NIMA TR 8350.2 [51]: semi-major axis; eccentricity; argument of periapsis; longitude of ascending node; inclination; mean anomaly at epoch time to.
The explicit epoch time associated to ephemeris data;
The location of the NTN-Gateways.

## Claims

1. Method for enabling communication between a user equipment (20) and a mobile communication network (100), the mobile communication network (100) being or at least comprising a non-terrestrial network, wherein the user equipment (20) is served by a base station entity (111) being part of that non-terrestrial network, wherein the base station entity (111) has an antenna entity or functionality (111') being either a satellite-based antenna entity or functionality, or an antenna entity or functionality based on a high-altitude platform, the antenna entity or functionality (111') moving relative to the Earth surface along a direction of movement (115), thereby providing radio coverage to a radio cell (11),
wherein the method comprises:
-- operating the antenna entity or functionality (111'), or
-- configuring the antenna entity or functionality (111') such that a shape of a coverage area of the radio cell (11) corresponds to a predefined non-circular and non-elliptical shape, and wherein the shape of the coverage area of the radio cell (11) corresponds, at least in one mode of operation, to a general polygon, being defined by a number of points or geographical locations such that a certain area is covered, and wherein the method further comprises:
-- generating, by the antenna entity or functionality (111'), at least one moving beam, wherein the moving beam is oriented in different spatial directions at different points in time such that the coverage area is swept through during a predetermined time interval and such that a resulting coverage area approximately corresponds to the predefined non-circular and non-elliptical shape of the coverage area of the radio cell (11), and
-- operating or configuring the antenna entity or functionality (111') such that, in a first mode of operation, the shape of the coverage area of the radio cell (11) corresponds to the predefined non-circular and non-elliptical shape, and, in a second mode of operation, the shape of the coverage area of the radio cell (11) corresponds to a further predefined shape, wherein the first mode of operation is applied during a first time interval, and the second mode of operation is applied during a second time interval.

2. Method according to claim 1, wherein the shape of the coverage area of the radio cell (11) corresponds to the general polygon, being defined by the number of points or geographical locations such that a certain populated area is covered.

3. Method according to one of the preceding claims, wherein the antenna entity or functionality (111') moving relative to an earth surface along a direction of movement (115) provides radio coverage to a moving area corresponding to an earth-moving radio cell (11).

4. Method according to claims 1 or 2, wherein the antenna entity or functionality (111') moving relative to the earth surface along a direction of movement (115) provides radio coverage to a static area corresponding to an earth-fixed radio cell (11).

5. Method according to one of the preceding claims, wherein the method further comprises: transmitting, by the base station entity or functionality (111) to the user equipment, a reference location information as well as a service time information, wherein the service time information relates to until when the base station entity or functionality (111) likely stops serving the currently covered area,
wherein the reference location information corresponds to the shape of the coverage area of the radio cell (11) generated by the antenna entity or functionality (111'),
wherein especially the base station entity or functionality (111) transmits to the user equipment (20) the reference location information and the service time information as information elements as part of a system information block, especially broadcast by the base station entity, especially system information block 19 with 3GPP NR technology (111).

6. Method according to claim 5, wherein the reference location information comprises a plurality of pieces of reference point information corresponding to corner points of the polygonal coverage area.

7. Base station entity (111) for enabling communication between a user equipment (20) and a mobile communication network (100), the mobile communication network (100) being or at least comprising a non-terrestrial network, wherein the base station entity (111) is configured to be part of that non-terrestrial network and to serve the user equipment (20), wherein the base station entity (111) has an antenna entity or functionality (111') being either a satellite-based antenna entity or functionality, or an antenna entity or functionality based on a high-altitude platform, the antenna entity or functionality (111') being configured to move relative to the Earth surface along a direction of movement (115), thereby providing radio coverage to a radio cell (11),
wherein the antenna entity or functionality (111') is adapted to be operated or configured such that a shape of a coverage area of the radio cell (11) corresponds to a predefined non-circular and non-elliptical shape, and wherein the shape of the coverage area of the radio cell (11) corresponds, at least in one mode of operation, to a general polygon, being defined by a number of points or geographical locations such that a certain area is covered, wherein
-- the antenna entity or functionality (111') is configured to generate at least one moving beam that is oriented in different spatial directions at different points in time, such that the coverage area is swept through during a predetermined time interval and such that a resulting coverage area approximately corresponds to the predefined non-circular and non-elliptical shape of the coverage area of the radio cell (11) and wherein the antenna entity or functionality (111') is configured such that, in a first mode of operation, the shape of the coverage area of the radio cell (11) corresponds to the predefined non-circular and non-elliptical shape, and, in a second mode of operation, the shape of the coverage area of the radio cell (11) corresponds to a further predefined shape, wherein the first mode of operation is applied during a first time interval, and the second mode of operation is applied during a second time interval.

8. System comprising a user equipment (20) and a mobile communication network (100), the mobile communication network (100) being or at least comprising a non-terrestrial network with a base station entity (111) according to claim 7.

9. Computer-readable medium comprising instructions which when executed on a computer, causes the computer to perform a method according one of claims 1 to 6.

## Patentansprüche

1. Verfahren zur Ermöglichung der Kommunikation zwischen einem Benutzergerät (20) und einem Mobilfunknetz (100), wobei das Mobilfunknetz (100) ein nicht-terrestrisches Netz ist oder zumindest ein solches umfasst, wobei das Benutzergerät (20) von einer Basisstationseinheit (111) bedient wird, die Teil dieses nicht-terrestrischen Netzes ist, wobei die Basisstationseinheit (111) eine Antenneneinheit oder -funktionalität (111') aufweist, die entweder eine satellitenbasierte Antenneneinheit oder -funktionalität oder eine Antenneneinheit oder -funktionalität auf Basis einer Hochaltitude-Plattform ist, wobei sich die Antenneneinheit oder - funktionalität (111') relativ zur Erdoberfläche entlang einer Bewegungsrichtung (115) bewegt und dadurch Funkabdeckung für eine Funkzelle (11) bereitstellt, wobei das Verfahren umfasst:
-- Betreiben der Antenneneinheit oder -funktionalität (111'), oder
-- Konfigurieren der Antenneneinheit oder -funktionalität (111') derart, dass eine Form eines Abdeckungsbereichs der Funkzelle (11) einer vordefinierten nicht-kreisförmigen und nicht-elliptischen Form entspricht, und wobei die Form des Abdeckungsbereichs der Funkzelle (11) zumindest in einem Betriebsmodus einem allgemeinen Polygon entspricht, das durch eine Anzahl von Punkten oder geografischen Orten definiert ist, sodass ein bestimmter Bereich abgedeckt wird, und wobei das Verfahren ferner umfasst:
-- Erzeugen, durch die Antenneneinheit oder -funktionalität (111'), mindestens eines beweglichen Strahls, wobei der bewegliche Strahl zu verschiedenen Zeitpunkten in verschiedene Raumrichtungen ausgerichtet ist, sodass der Abdeckungsbereich während eines vorbestimmten Zeitintervalls überstrichen wird und sodass ein resultierender Abdeckungsbereich näherungsweise der vordefinierten nicht-kreisförmigen und nicht-elliptischen Form des Abdeckungsbereichs der Funkzelle (11) entspricht, und
-- Betreiben oder Konfigurieren der Antenneneinheit oder -funktionalität (111') derart, dass in einem ersten Betriebsmodus die Form des Abdeckungsbereichs der Funkzelle (11) der vordefinierten nicht-kreisförmigen und nicht-elliptischen Form entspricht, und in einem zweiten Betriebsmodus die Form des Abdeckungsbereichs der Funkzelle (11) einer weiteren vordefinierten Form entspricht, wobei der erste Betriebsmodus während eines ersten Zeitintervalls angewendet wird und der zweite Betriebsmodus während eines zweiten Zeitintervalls angewendet wird.

2. Verfahren nach Anspruch 1, wobei die Form des Abdeckungsbereichs der Funkzelle (11) dem allgemeinen Polygon entspricht, das durch die Anzahl von Punkten oder geografischen Orten definiert ist, sodass eine bestimmte besiedelte Fläche abgedeckt wird.

3. Verfahren nach einem der vorhergehenden Ansprüche, wobei die Antenneneinheit oder -funktionalität (111'), die sich relativ zu einer Erdoberfläche entlang einer Bewegungsrichtung (115) bewegt, Funkabdeckung für einen bewegten Bereich bereitstellt, der einer erdbeweglichen Funkzelle (11) entspricht.

4. Verfahren nach Anspruch 1 oder 2, wobei die Antenneneinheit oder -funktionalität (111'), die sich relativ zur Erdoberfläche entlang einer Bewegungsrichtung (115) bewegt, Funkabdeckung für einen statischen Bereich bereitstellt, der einer erdfesten Funkzelle (11) entspricht.

5. Verfahren nach einem der vorhergehenden Ansprüche, wobei das Verfahren ferner umfasst: Übertragen, durch die Basisstationseinheit oder -funktionalität (111) an das Benutzergerät, einer Referenzortsinformation sowie einer Dienstzeitinformation, wobei sich die Dienstzeitinformation darauf bezieht, bis wann die Basisstationseinheit oder -funktionalität (111) wahrscheinlich aufhört, den derzeit abgedeckten Bereich zu bedienen, wobei die Referenzortsinformation der Form des Abdeckungsbereichs der Funkzelle (11) entspricht, der von der Antenneneinheit oder -funktionalität (111') erzeugt wird, wobei insbesondere die Basisstationseinheit oder -funktionalität (111) an das Benutzergerät (20) die Referenzortsinformation und die Dienstzeitinformation als Informationselemente als Teil eines Systeminformationsblocks überträgt, insbesondere ausgesendet von der Basisstationseinheit, insbesondere Systeminformationsblock 19 mit 3GPP NR Technologie (111).

6. Verfahren nach Anspruch 5, wobei die Referenzortsinformation eine Vielzahl von Teilen einer Referenzpunktinformation umfasst, die Eckpunkten des polygonalen Abdeckungsbereichs entsprechen.

7. Basisstationseinheit (111) zur Ermöglichung der Kommunikation zwischen einem Benutzergerät (20) und einem Mobilfunknetz (100), wobei das Mobilfunknetz (100) ein nicht-terrestrisches Netz ist oder zumindest ein solches umfasst, wobei die Basisstationseinheit (111) konfiguriert ist, Teil dieses nicht-terrestrischen Netzes zu sein und das Benutzergerät (20) zu bedienen, wobei die Basisstationseinheit (111) eine Antenneneinheit oder -funktionalität (111') aufweist, die entweder eine satellitenbasierte Antenneneinheit oder -funktionalität oder eine Antenneneinheit oder -funktionalität auf Basis einer Hochaltitude-Plattform ist, wobei die Antenneneinheit oder -funktionalität (111') konfiguriert ist, sich relativ zur Erdoberfläche entlang einer Bewegungsrichtung (115) zu bewegen und dadurch Funkabdeckung für eine Funkzelle (11) bereitzustellen, wobei die Antenneneinheit oder -funktionalität (111') angepasst ist, betrieben oder konfiguriert zu werden, sodass eine Form eines Abdeckungsbereichs der Funkzelle (11) einer vordefinierten nicht-kreisförmigen und nicht-elliptischen Form entspricht, und wobei die Form des Abdeckungsbereichs der Funkzelle (11) zumindest in einem Betriebsmodus einem allgemeinen Polygon entspricht, das durch eine Anzahl von Punkten oder geografischen Orten definiert ist, sodass ein bestimmter Bereich abgedeckt wird, wobei
-- die Antenneneinheit oder -funktionalität (111') konfiguriert ist, mindestens einen beweglichen Strahl zu erzeugen, der zu verschiedenen Zeitpunkten in verschiedene Raumrichtungen ausgerichtet ist, sodass der Abdeckungsbereich während eines vorbestimmten Zeitintervalls überstrichen wird und sodass ein resultierender Abdeckungsbereich näherungsweise der vordefinierten nicht-kreisförmigen und nicht-elliptischen Form des Abdeckungsbereichs der Funkzelle (11) entspricht, und wobei die Antenneneinheit oder -funktionalität (111') konfiguriert ist, sodass in einem ersten Betriebsmodus die Form des Abdeckungsbereichs der Funkzelle (11) der vordefinierten nicht-kreisförmigen und nicht-elliptischen Form entspricht, und in einem zweiten Betriebsmodus die Form des Abdeckungsbereichs der Funkzelle (11) einer weiteren vordefinierten Form entspricht, wobei der erste Betriebsmodus während eines ersten Zeitintervalls angewendet wird und der zweite Betriebsmodus während eines zweiten Zeitintervalls angewendet wird.

8. System umfassend ein Benutzergerät (20) und ein Mobilfunknetz (100), wobei das Mobilfunknetz (100) ein nicht-terrestrisches Netz ist oder zumindest ein solches umfasst mit einer Basisstationseinheit (111) nach Anspruch 7.

9. Computerlesbares Medium umfassend Anweisungen, die, wenn sie auf einem Computer ausgeführt werden, den Computer veranlassen, ein Verfahren nach einem der Ansprüche 1 bis 6 durchzuführen.

## Revendications

1. Procédé pour permettre la communication entre un équipement utilisateur (20) et un réseau de communication mobile (100), le réseau de communication mobile (100) étant ou comprenant au moins un réseau non terrestre, dans lequel l'équipement utilisateur (20) est desservi par une entité de station de base (111) faisant partie de ce réseau non terrestre, dans lequel l'entité de station de base (111) a une entité d'antenne ou fonctionnalité (111') étant soit une entité d'antenne ou fonctionnalité satellitaire, soit une entité d'antenne ou fonctionnalité basée sur une plateforme à haute altitude, l'entité d'antenne ou fonctionnalité (111') se déplaçant par rapport à la surface terrestre le long d'une direction de mouvement (115), fournissant ainsi une couverture radio à une cellule radio (11), dans lequel le procédé comprend :
-- l'exploitation de l'entité d'antenne ou fonctionnalité (111'), ou
-- la configuration de l'entité d'antenne ou fonctionnalité (111') de sorte qu'une forme d'une zone de couverture de la cellule radio (11) corresponde à une forme prédéfinie non circulaire et non elliptique, et dans lequel la forme de la zone de couverture de la cellule radio (11) correspond, au moins dans un mode de fonctionnement, à un polygone général, étant défini par un nombre de points ou localisations géographiques de sorte qu'une certaine zone soit couverte, et dans lequel le procédé comprend en outre :
-- la génération, par l'entité d'antenne ou fonctionnalité (111'), d'au moins un faisceau mobile, dans lequel le faisceau mobile est orienté dans différentes directions spatiales à différents moments dans le temps de sorte que la zone de couverture soit balayée pendant un intervalle de temps prédéterminé et de sorte qu'une zone de couverture résultante corresponde approximativement à la forme prédéfinie non circulaire et non elliptique de la zone de couverture de la cellule radio (11), et
**--** l'exploitation ou la configuration de l'entité d'antenne ou fonctionnalité (111') de sorte que, dans un premier mode de fonctionnement, la forme de la zone de couverture de la cellule radio (11) corresponde à la forme prédéfinie non circulaire et non elliptique, et, dans un second mode de fonctionnement, la forme de la zone de couverture de la cellule radio (11) corresponde à une autre forme prédéfinie, dans lequel le premier mode de fonctionnement est appliqué pendant un premier intervalle de temps, et le second mode de fonctionnement est appliqué pendant un second intervalle de temps.

2. Procédé selon la revendication 1, dans lequel la forme de la zone de couverture de la cellule radio (11) correspond au polygone général, étant défini par le nombre de points ou localisations géographiques de sorte qu'une certaine zone peuplée soit couverte.

3. Procédé selon l'une des revendications précédentes, dans lequel l'entité d'antenne ou fonctionnalité (111') se déplaçant par rapport à une surface terrestre le long d'une direction de mouvement (115) fournit une couverture radio à une zone mobile correspondant à une cellule radio mobile terrestre (11).

4. Procédé selon les revendications 1 ou 2, dans lequel l'entité d'antenne ou fonctionnalité (111') se déplaçant par rapport à la surface terrestre le long d'une direction de mouvement (115) fournit une couverture radio à une zone statique correspondant à une cellule radio fixe terrestre (11).

5. Procédé selon l'une des revendications précédentes, dans lequel le procédé comprend en outre : la transmission, par l'entité de station de base ou fonctionnalité (111) à l'équipement utilisateur, d'une information de localisation de référence ainsi que d'une information de temps de service, dans lequel l'information de temps de service se rapporte à jusqu'à quand l'entité de station de base ou fonctionnalité (111) cessera probablement de desservir la zone actuellement couverte, dans lequel l'information de localisation de référence correspond à la forme de la zone de couverture de la cellule radio (11) générée par l'entité d'antenne ou fonctionnalité (111'), dans lequel en particulier l'entité de station de base ou fonctionnalité (111) transmet à l'équipement utilisateur (20) l'information de localisation de référence et l'information de temps de service comme éléments d'information faisant partie d'un bloc d'information système, en particulier diffusé par l'entité de station de base, en particulier bloc d'information système 19 avec la technologie 3GPP NR (111).

6. Procédé selon la revendication 5, dans lequel l'information de localisation de référence comprend une pluralité de pièces d'information de point de référence correspondant aux points d'angle de la zone de couverture polygonale.

7. Entité de station de base (111) pour permettre la communication entre un équipement utilisateur (20) et un réseau de communication mobile (100), le réseau de communication mobile (100) étant ou comprenant au moins un réseau non terrestre, dans lequel l'entité de station de base (111) est configurée pour faire partie de ce réseau non terrestre et pour desservir l'équipement utilisateur (20), dans lequel l'entité de station de base (111) a une entité d'antenne ou fonctionnalité (111') étant soit une entité d'antenne ou fonctionnalité satellitaire, soit une entité d'antenne ou fonctionnalité basée sur une plateforme à haute altitude, l'entité d'antenne ou fonctionnalité (111') étant configurée pour se déplacer par rapport à la surface terrestre le long d'une direction de mouvement (115), fournissant ainsi une couverture radio à une cellule radio (11), dans lequel l'entité d'antenne ou fonctionnalité (111') est adaptée pour être exploitée ou configurée de sorte qu'une forme d'une zone de couverture de la cellule radio (11) corresponde à une forme prédéfinie non circulaire et non elliptique, et dans lequel la forme de la zone de couverture de la cellule radio (11) correspond, au moins dans un mode de fonctionnement, à un polygone général, étant défini par un nombre de points ou localisations géographiques de sorte qu'une certaine zone soit couverte, dans lequel
-- l'entité d'antenne ou fonctionnalité (111') est configurée pour générer au moins un faisceau mobile qui est orienté dans différentes directions spatiales à différents moments dans le temps, de sorte que la zone de couverture soit balayée pendant un intervalle de temps prédéterminé et de sorte qu'une zone de couverture résultante corresponde approximativement à la forme prédéfinie non circulaire et non elliptique de la zone de couverture de la cellule radio (11) et dans lequel l'entité d'antenne ou fonctionnalité (111') est configurée de sorte que, dans un premier mode de fonctionnement, la forme de la zone de couverture de la cellule radio (11) corresponde à la forme prédéfinie non circulaire et non elliptique, et, dans un second mode de fonctionnement, la forme de la zone de couverture de la cellule radio (11) corresponde à une autre forme prédéfinie, dans lequel le premier mode de fonctionnement est appliqué pendant un premier intervalle de temps, et le second mode de fonctionnement est appliqué pendant un second intervalle de temps.

8. Système comprenant un équipement utilisateur (20) et un réseau de communication mobile (100), le réseau de communication mobile (100) étant ou comprenant au moins un réseau non terrestre avec une entité de station de base (111) selon la revendication 7.

9. Support lisible par ordinateur comprenant des instructions qui, lorsqu'elles sont exécutées sur un ordinateur, amènent l'ordinateur à effectuer un procédé selon l'une des revendications 1 à 6.
